# EUROPEAN PATENT APPLICATION

(11) **EP 4 730 067 A1**
(43) Date of publication of application: **22.04.2026**
(21) Application number: 25204052.2
(22) Date of filing: 23.09.2025
(51) Int. Cl.: G05D 1/695, G05D 1/698, G05D 105/45, G05D 107/70, G05D 109/10

(54) **CONTROL APPARATUS, CONTROL SYSTEM, CONTROL METHOD, CONTROL PROGRAM, AND METHOD FOR MANUFACTURING MOBILE BODY**

(30) Priority: 16.10.2024 JP 2024180576
(71) Applicant: TOYOTA JIDOSHA KABUSHIKI KAISHA, Toyota-shi, Aichi-ken 471-8571 (JP)
(72) Inventor: IWAZAKI, Noritsugu, Toyota-shi, 471-8571 (JP); OKAMOTO, Yuki, Toyota-shi, 471-8571 (JP); KASAI, Eiji, Toyota-shi, 471-8571 (JP); WATANABE, Yoshinori, Toyota-shi, 471-8571 (JP)
(74) Representative: J A Kemp LLP

(57) **Abstract**

A control apparatus, a control system, a control method, a control program, and a method for manufacturing mobile bodies capable of preventing a traffic jam from occurring in traveling in platooning are provided. A control system (50) is a control system for controlling operations performed by a plurality of vehicles (100) traveling in platooning, and includes a time information output unit (212), a destination position related information output unit (213), and a control information output unit (214). The time information output unit (212) outputs time information specifying a time. The destination position related information output unit (213) outputs, for each of the plurality of vehicles (100), destination position related information related to a position which the vehicle (100) should reach at a time indicated by time information. The control information output unit (214) outputs control information for controlling the operations performed by the vehicles (100) based on the time information and the destination position related information.

## Description

### BACKGROUND

The present disclosure relates to a control apparatus, a control system, a control method, a control program, and a method for manufacturing mobile bodies.

Patent Literature 1 discloses a control apparatus for controlling the traveling state of at least one vehicle among a plurality of vehicles which are traveling in a line (hereinafter also referred to as traveling in platooning).

[Patent Literature 1] Japanese Unexamined Patent Application Publication No. 2022-057152

### SUMMARY

It should be noted that when a plurality of mobile bodies travel in platooning, distances between vehicles may increase and decrease. When the distances between vehicles decrease, a vehicle(s) running in the rear may be forced to decelerate, consequently, causing a problem that a traffic jam occurs in the traveling in platooning.

Patent Literature 1 does not disclose any technology that can solve such a problem.

The present disclosure has been made to solve such a problem, and an object thereof is to provide a control apparatus, a control system, a control method, a control program, and a method for manufacturing mobile bodies capable of preventing a traffic jam from occurring in traveling in platooning.

A control apparatus according to the present disclosure is a control apparatus configured to control operations performed by a plurality of mobile bodies traveling in platooning, and includes a time information output unit, a destination position related information output unit, and a control information output unit. The time information output unit outputs time information specifying a time. The destination position related information output unit outputs, for each of the plurality of mobile bodies, destination position related information related to a position which the mobile body should reach at a time indicated by time information. The control information output unit outputs control information for controlling the operations performed by the mobile bodies based on the time information and the destination position related information.

According to the above-described configuration, the control apparatus according to the present disclosure can make vehicles travel in platooning while maintaining distances between the vehicles. As a result, the control apparatus according to the embodiment can prevent a traffic jam from occurring in the traveling in platooning.

In the above-described control apparatus, the control information may be information associating the time information with the destination position related information.

According to the above-described configuration, a vehicle 100 can appropriately perform unattended driving.

In the above-described control apparatus, the control information may be a control parameter of a mobile body output based on the time information and the destination position related information.

According to the above-described configuration, a vehicle does not need to have a configuration for outputting a control parameter. As a result, the control system according to the present disclosure can simplify the configuration of the vehicle.

The above-described control apparatus may further include a current position information acquisition unit configured to acquire current position information indicating a current position of a mobile body. Further, the control information output unit may output a control parameter related to a speed of a mobile body based on a distance between a position indicated by the destination position related information and a position indicated by the current position information.

According to the above-described configuration, it is possible to appropriately output a control parameter of a mobile body.

In the control system according to the present disclosure, the destination position related information may include, for each mobile body, position information indicating a position which the mobile body should reach at a time indicated by the time information, and the control system may further include a current position information acquisition unit configured to acquire current position information of a mobile body. Further, when a distance between a position indicated by the destination position related information and a position indicated by the current position information satisfies a predetermined condition, the control information output unit may output control information for instructing a mobile body to perform an emergency operation.

According to the above-described configuration, the control system according to the embodiment can control the power output of a vehicle to a predetermined value or lower.

In the control system according to the present disclosure, the destination position related information may include, for each mobile body, position information indicating a position which the mobile body should reach at a time indicated by the time information, and when a difference in distance between a position indicated by the destination position related information and a position indicated by the current position information is a predetermined value or larger, the control information output unit may output control information for instructing a mobile body to perform an emergency operation.

According to the above-described configuration, the control system according to the embodiment can appropriately control the power output of a vehicle.

A control system according to the present disclosure is a control apparatus configured to control operations performed by a plurality of mobile bodies traveling in platooning, and includes a time information output unit, a destination position related information output unit, and a control information output unit. The time information output unit outputs time information specifying a time. The destination position related information output unit outputs, for each of the plurality of mobile bodies, destination position related information related to a position which the mobile body should reach at a time indicated by time information. The control information output unit outputs control information for controlling the operations performed by the mobile bodies based on the time information and the destination position related information.

A control method according to the present disclosure is a control method for controlling operations performed by a plurality of mobile bodies traveling in platooning. In the control method according to the present disclosure, time information specifying a time is output. for each of the plurality of mobile bodies, destination position related information related to a position which the mobile body should reach at a time indicated by time information is output. control information for controlling the operations performed by the mobile bodies is output based on the time information and the destination position related information.

A control program according to the present disclosure is a control program for controlling operations performed by a plurality of mobile bodies traveling in platooning. The control program according to the present disclosure causes a computer to perform operations including: outputting time information specifying a time; outputting, for each of the plurality of mobile bodies, destination position related information related to a position which the mobile body should reach at a time indicated by time information; and outputting control information for controlling the operations performed by the mobile bodies based on the time information and the destination position related information.

A method for manufacturing mobile bodies according to the present disclosure includes: outputting time information specifying a time; outputting, for each of a plurality of mobile bodies traveling in platooning, destination position related information related to a position which the mobile body should reach at a time indicated by time information; outputting control information for controlling the operations performed by the mobile bodies based on the time information and the destination position related information; and performing manufacturing work for the plurality of mobile bodies traveling in platooning based on the control information.

According to the present disclosure, it is possible to provide a control apparatus, a control system, a control method, a control program, and a method for manufacturing mobile bodies capable of preventing a traffic jam from occurring in traveling in platooning.

The above and other objects, features and advantages of the present disclosure will become more fully understood from the detailed description given hereinbelow and the accompanying drawings.

### BRIEF DESCRIPTION OF DRAWINGS

Fig. 1 is a schematic bird's-eye view for explaining a configuration of a control system according to a first embodiment;
Fig. 2 is a block diagram for explaining the configuration of the control system according to the first embodiment;
Fig. 3 is a block diagram for explaining a configuration of a vehicle according to the first embodiment;
Fig. 4 is a block diagram for explaining the configuration of the control system according to the first embodiment;
Fig. 5 is a flowchart showing a control method according to the first embodiment; and
Fig. 6 is a flowchart showing a control method according to a second embodiment.

### DESCRIPTION OF EMBODIMENTS

### <First Embodiment>

### (Configuration of Control System)

A first embodiment according to the present disclosure will be described hereinafter in detail with reference to the drawings. Firstly, a configuration of a control system according to this embodiment will be described.

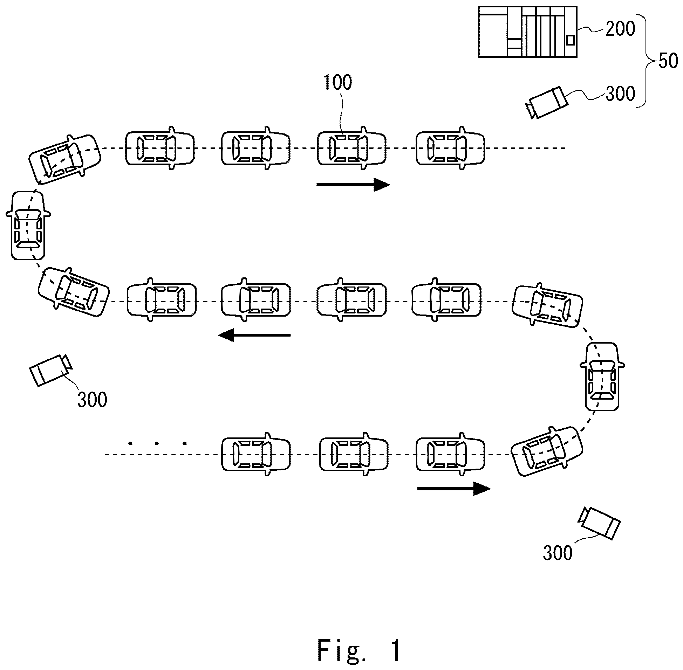

Fig. 1 is a schematic bird's-eye view for explaining the configuration of the control system according to this embodiment and vehicles 100 to be controlled by the control system.

As shown in Fig. 1, the control system 50 according to this embodiment controls operations performed by a plurality of vehicles 100 traveling in platooning. In other words, the control system 50 controls the traveling in platooning of the plurality of vehicles 100.

Although its details will be described later, the control system 50 according to this embodiment outputs control information of the vehicles 100 and transmits it to the vehicles 100. Then, the vehicles 100, which have received the control information, perform unattended driving based on the control information, and thereby perform traveling in platooning.

Note that the "unattended driving" means driving which does not require any traveling operation performed by an occupant. Further, the traveling operation means an operation related to at least one of "running", "turning", and "stopping" of the vehicle 100.

However, an occupant(s) who does not perform the traveling operation may be in the vehicle 100 which is traveling by unattended driving. Examples of occupants who do not perform a traveling operation include a person who is simply seated in a seat of the vehicle 100, an occupant who is performing a task other than the traveling operation, such as assembling, inspections, or operations of switches, in the vehicle 100.

The control system 50 can be used for any purpose as long as it makes a plurality of vehicles travel in platooning.

For example, the control system 50 may be used to convey a plurality of vehicles manufactured in a vehicle manufacturing factory to a yard. Further, the control system 50 may also be used to load a plurality of vehicles onto a ship or a freight train. Further, the control system 50 may be used to make uncompleted vehicles travel in platooning in a vehicle manufacturing factory.

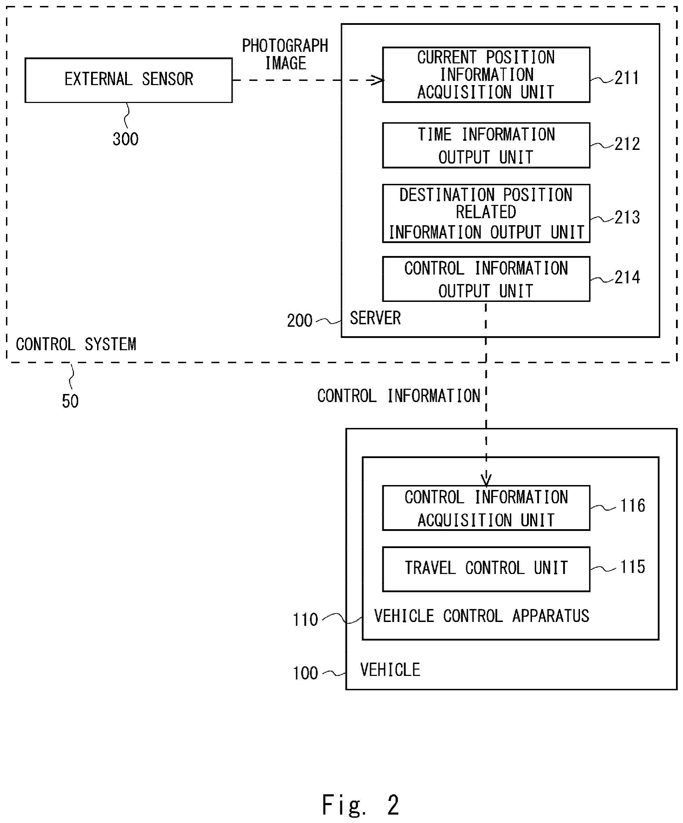

Fig. 2 is a block diagram showing configurations of the control system according to this embodiment and a vehicle.

As shown in Fig. 2, the control system 50 includes an external sensor 300 and a server 200, and transmits control information to the vehicle 100.

The vehicle 100 travels by unattended driving. More specifically, the vehicle 100 according to this embodiment includes a vehicle control apparatus 110, and performs unattended driving by operating various groups of actuators under the control of the vehicle control apparatus 110.

The vehicle control apparatus 110 according to this embodiment includes, as functional blocks, a control information acquisition unit 116 and a travel control unit 115.

The control information acquisition unit 116 acquires control information of the vehicles 100 from the server 200. More specifically, the control information acquisition unit 116 acquires control information of the vehicles 100 from the server 200 through wireless communication. The control information acquisition unit 116 outputs the acquired control information to the travel control unit 115.

Note that although its details will be described later, the above-described control information is information associating time information specifying a time and destination position related information related to the position that the vehicle 100 should reach at the time indicated by the time information. That is, the control information according to this embodiment is information indicating the destination position of the vehicle 100 at the specified time.

The travel control unit 115 makes the vehicles 100 travel by controlling a group of actuators (hereinafter also referred to as an actuator group) (which will be described later). The travel control unit 115 acquires control information from the control information acquisition unit 116. The travel control unit 115 generates a control parameter(s) based on the acquired control information, and controls the actuator group based on the generated control parameter.

Note that the control parameter in this specification is a parameter related to at least one of "running", "turning", and "stopping" of the vehicle 100.

Examples of operation parameters related to the "running" operation of the vehicle 100 include a speed, an acceleration, and engine power of the vehicle 100.

Further, examples of operation parameters related to the "turning" operation of the vehicle 100 include the steering angle of the vehicle 100 and the angle of the steering wheel.

Further, examples of operation parameters related to the "stopping" operation of the vehicle 100 include the acceleration of the vehicle 100 and the braking power.

That is, the control parameter according to this embodiment may be any parameter related to the movement of the vehicle 100.

The travel control unit 115 may, for example, generate, in addition to the control information, a control parameter(s) based on the current position of the vehicle 100.

In this case, the travel control unit 115 may calculate a difference between the current position and the destination position defined by the control information, i.e., calculate the moving distance. Further, the travel control unit 115 may calculate a difference between the current time and the time defined by the control information, i.e., calculate the moving time. Then, the travel control unit 115 may generate a control parameter(s) based on the calculated moving distance and the moving time.

Note that the method for acquiring the current position of the vehicle 100 used in the above-described case is not limited to any particular methods. For example, an internal sensor (not shown) provided in the vehicle 100 may detect the current position.

In this case, the vehicle 100 may include the internal sensor such as a camera, LiDAR, a millimeter-wave radar, an ultrasonic sensor, a GPS sensor, an acceleration sensor, and a gyroscopic sensor.

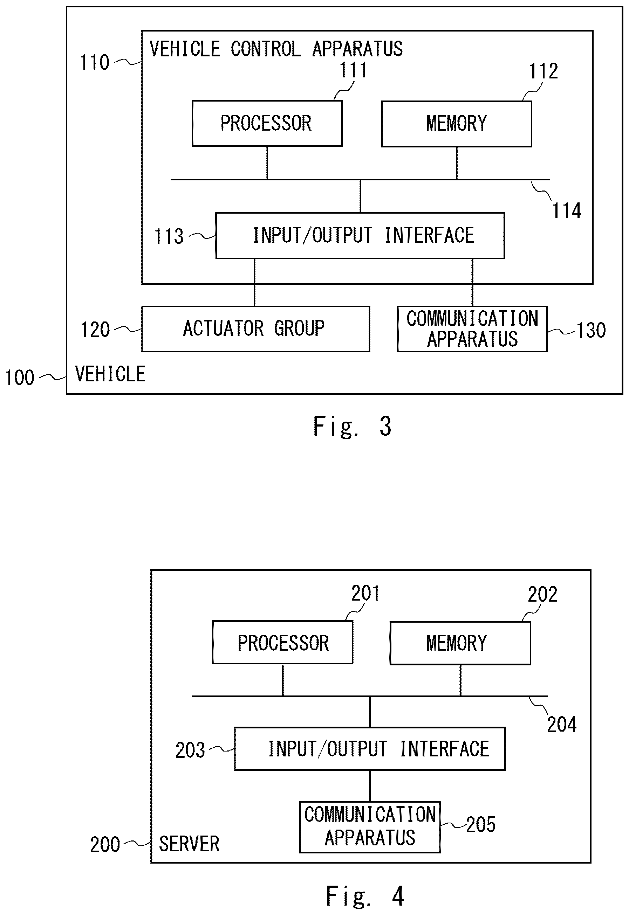

Fig. 3 is a block diagram for explaining the configuration of the vehicle 100 in a more detailed manner.

The vehicle 100 includes a vehicle control apparatus 110 for controlling each component of the vehicle 100, an actuator group 120 including one or more actuators driven under the control of the vehicle control apparatus 110, and a communication apparatus 130 for communicating with an external apparatus such as the server 200 by wireless communication.

The vehicle control apparatus 110 is composed of a computer including a processor 111, a memory 112, an input/output interface 113, and an internal bus 114.

The processor 111, the memory 112, and the input/output interface 113 are bidirectionally connected to each other through the internal bus 114 so that they can communicate with each other.

The actuator group 120 and the communication apparatus 130 are connected to the input/output interface 113. The processor 111 implements various functions including functions as the travel control unit 115 and the control information acquisition unit 116 by executing a program PG1 stored in the memory 112.

The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

The actuator group 120 includes an actuator of a driving apparatus for accelerating the vehicle 100, an actuator of a steering apparatus for changing the traveling direction of the vehicle 100, and an actuator of a braking apparatus for decelerating the vehicle 100.

The following descriptions will be given by referring to Fig. 2 again.

The external sensor 300 is a sensor located outside the vehicle 100. The external sensor 300 in this embodiment is a sensor for capturing the vehicle 100 from the outside of the vehicle 100. The external sensor 300 includes a communication apparatus (not shown) and can communicate with other apparatuses such as the server 200 by wired communication or wireless communication. The external sensor 300 transmits a detection result to the server 200.

Specifically, the external sensor 300 according to this embodiment is formed by a camera. The camera, which serves as the external sensor 300, takes a photograph image in which the vehicle 100 is shown, and outputs the photograph image as a detection result. Then, it transmits the output photograph image to the server 200.

Note that although its details will be described later, the server 200 is configured to be able to detect position information of the vehicle 100 based on the photograph image output by the external sensor 300.

Note that although the external sensor 300 according to this embodiment is a camera, the configuration of the external sensor according to the present disclosure is not limited to this example.

For example, the external sensor 300 may be LiDAR (Light Detection And Ranging). In this case, the detection result output by the external sensor 300 may be three-dimensional point cloud data representing the vehicle 100. In this case, the server 200 and/or the vehicle 100 are configured to be able to acquire vehicle position information by template matching using the three-dimensional point cloud data, which is the detection result, and reference point cloud data prepared in advance.

That is, the external sensor 300 according to this embodiment may use any sensor capable of detecting position information of a vehicle.

The server 200 controls operations performed by a plurality of vehicles traveling in platooning. The server 200 includes, as functional blocks, a current position information acquisition unit 211, a time information output unit 212, a destination position related information output unit 213, and a control information output unit 214.

The current position information acquisition unit 211 acquires current position information indicating the current position of the vehicle 100.

More specifically, firstly, the current position information acquisition unit 211 acquires a detection result from the external sensor 300 through wireless or wired communication. Then, the current position information acquisition unit 211 specifies the current position of the vehicle 100 based on the acquired detection result. The current position information acquisition unit 211 outputs the acquired current position information of the vehicle 100 to the control information output unit 214.

More specifically, the current position information acquisition unit 211 according to this embodiment acquires a photograph image obtained by photographing the vehicle 100 from the external sensor 300, which is configured as a camera.

The current position information acquisition unit 211 acquires the current position of the vehicle 100 by, for example, detecting the outer shape of the vehicle 100 from the photograph image, calculating the coordinates of the positioning point of the vehicle 100 in the coordinate system of the photograph image, i.e., the local coordinate system, and converting the calculated coordinates into coordinates in the global coordinate system GC.

The outer shape of the vehicle 100 shown in the photograph image can be detected, for example, by inputting the photograph image into a detection model DM using artificial intelligence. The detection model DM is, for example, prepared in the system 50 or outside the system 50, and stored in the server 200 in advance.

Examples of the detection model DM include a trained machine learning model that has been trained to implement either semantic segmentation or instance segmentation. As this machine learning model, for example, a convolutional neural network (hereinafter also referred to as a CNN) that has been trained by supervised learning using a learning data set can be used. The learning data set includes, for example, a plurality of training images including vehicles 100, and labels each of which indicates whether a respective area in training images is an area indicating a vehicle 100 or an area other than the vehicle 100. When the CNN is trained, parameters of the CNN are preferably updated so as to reduce errors between output results of the detection model DM and labels by back-propagation (error back-propagation method).

Further, the current position information acquisition unit 211 may acquire the direction of the vehicle 100 by, for example, estimating it based on the direction of the moving vector of the vehicle 100 calculated from the positional changes of feature points of the vehicle 100 between frames of the photograph image by using an optical flow method.

The time information output unit 212 outputs time information specifying a time. The time information output unit 212 outputs the time information to the destination position related information output unit 213.

Note that the time information may be any information as long as the time can be specified. For example, the time information may be information specifying a specific time such as "12:00:00". Further, the time information may be information specifying a time by specifying an elapsed time from a reference time, such as "five seconds later".

For example, the time information output unit 212 may successively specify a time every time a predetermined time has elapsed from the reference time, and output the specified time as time information.

For example, the time information output unit 212 may successively output time information specifying a time at intervals of five seconds from the reference time "12:00:00", such as "12:00:00", "12:00:05", "12:00:10", and "12:00:15".

That is, the time information output unit 212 may output time information specifying a time that is substantially determined in advance.

Further, for example, the time information output unit 212 may confirm that a plurality of vehicles 100 have reached a destination position(s) specified by the destination position related information output unit 213 (which will be described later). Then, the time information output unit 212 may specify a time after a predetermined time has elapsed from the time when the completion of the movements of the plurality of vehicles 100 is confirmed, and output the specified time as time information.

That is, the time information output unit 212 may specify a time based on the operations (or movements) performed by the vehicles 100 and output the specified time as time information.

The destination position related information output unit 213 acquires time information from the time information output unit 212. The destination position related information output unit 213 outputs, for each of the plurality of vehicles 100, destination position related information related to the position that the vehicle 100 should reach at the time indicated by the time information. The destination position related information output unit 213 outputs the destination position related information to the control information output unit 214.

Note that the destination position related information in this specification is information that defines, for each vehicle 100, the position that the vehicle 100 should reach at the time indicated by the time information.

In this embodiment, the destination position related information includes, for each vehicle 100, coordinate information indicating the position that the vehicle 100 should reach at the time indicated by the time information. That is, the destination position related information according to this embodiment includes, for each vehicle 100, position information indicating the position that the vehicle 100 should reach.

However, the destination position related information according to the present disclosure is not limited to position information such as coordinate information, and instead may be any information as long as it can define, for each of a plurality of vehicles 100, the position that the vehicle 100 should reach in some way or other.

For example, the destination position related information may include information defining, for each of a plurality of vehicles 100, a vehicle speed that the vehicle 100 should have at a time indicated by the time information.

Further, for example, the destination position related information may include, for each vehicle 100, information associating the current position of the vehicle 100 with a vehicle speed that the vehicle 100 should have at a time indicated by the time information.

As described above, the destination position related information output unit 213 specifies a destination position of each of the plurality of vehicles 100 that perform traveling in platooning for the time specified by the acquired time information. That is, the control system 50 according to this embodiment controls operations performed by the plurality of vehicles 100 by using the time information which is common among the vehicles.

According to the above-described configuration, the control system 50 according to this embodiment can make the vehicles 100 travel in platooning while maintaining distances between the vehicles 100. As a result, the control system 50 according to this embodiment can prevent a traffic jam from occurring in traveling in platooning.

The method by which the destination position related information output unit 213 determines the destination position of the plurality of vehicles 100 is not limited to any particular methods. For example, the destination position can be determined by the following method.

For example, the destination position related information output unit 213 may first determine the destination position of the first vehicle, i.e., the vehicle at the head of the traveling in platooning, on a predetermined traveling path. Then, the following vehicle, e.g., each of the following vehicles, may be disposed on the predetermined traveling path with a predetermined distance between the determined position of the first vehicle and the position of the following vehicle.

According to the above-described configuration, the control system 50 according to this embodiment can control the traveling in platooning while maintaining distances between the vehicles more appropriately, consequently making it possible to prevent a traffic jam from occurring more effectively.

Further, in the above-described case, the destination position related information output unit 213 may determine the destination position of the first vehicle based on the current position information, the operating state, and the like of the first vehicle.

Note that the destination position related information may be any information as long as the position can be specified. For example, the destination position related information may be information specifying the destination position by coordinates on X-, Y- and Z-axes in the global coordinate system.

The control information output unit 214 acquires time information from the time information output unit 212, and acquires destination position related information from the destination position related information output unit 213. The control information output unit 214 outputs control information for controlling the operations of the mobile bodies based on the time information and the destination position related information. The control information output unit 214 transmits the control information to the vehicles 100 by wireless or wired communication.

Note that as described above, the control information according to this embodiment is information associating time information with destination position related information. That is, in this embodiment, the control information output unit 214 transmits a control signal in which the acquired time information and the destination position related information are recorded to the vehicles 100.

Further, the control information output unit 214 may acquire the current position information of the vehicle 100 from the current position information acquisition unit 211.

When the distance between the position indicated by the destination position related information and the position indicated by the current position information satisfies a predetermined condition, the control information output unit 214 may output control information for instructing the vehicle 100 to perform an emergency operation.

Note that the emergency operation in this specification is, for example, a temporary stop of the traveling in platooning or an operation for making the vehicle 100 of which the difference in distance between the position indicated by the destination position related information and the position indicated by the current position information is equal to or longer than a predetermined value escape to a predetermined space.

According to the above-described configuration, the control system 50 according to this embodiment can control the power output of the vehicle 100 to a predetermined value or lower.

Note that the above-described predetermined condition is a condition related to the distance between the position indicated by the destination position related information and the position indicated by the current position information, and may be any condition related to the amount of movement of the vehicle 100.

The above-described predetermined condition may be, for example, a condition related to the distance between the position indicated by the destination position related information and the position indicated by the current position information. In this case, the control information output unit 214 may output control information for instructing the vehicle 100 to perform an emergency operation when the distance between the position indicated by the destination position related information and the position indicated by the current position information is equal to or longer than a predetermined value.

Further, the above-described predetermined condition may be, for example, a condition related to the amount of change in the distance between the position indicated by the destination position related information and the position indicated by the current position information. In this case, the control information output unit 214 may output control information for instructing the vehicle 100 to perform an emergency operation when the amount of change in the distance between the position indicated by the destination position related information and the position indicated by the current position information is equal to or longer than a predetermined value.

Fig. 4 is a block diagram for explaining the configuration of the server 200 in a more detailed manner.

The server 200 is composed of a computer including a processor 201, a memory 202, an input/output interface 203, and an internal bus 204.

The processor 201, the memory 202, and the input/output interface 203 are bidirectionally connected to each other through the internal bus 204 so that they can communicate with each other.

A communication apparatus 205 for communicating with various apparatuses located outside the server 200 is connected to the input/output interface 203.

The communication apparatus 205 can communicate with the vehicle 100 by wireless communication, and can communicate with each external sensor 300 by wired communication or wireless communication.

The processor 201 implements various functions including functions as the current position information acquisition unit 211, the time information output unit 212, the destination position related information output unit 213, and the control information output unit 214 by executing a program PG2 stored in the memory 202.

Note that the server 200 according to this embodiment, i.e., the control apparatus according to this embodiment, is physically configured as a single apparatus, but the configuration of the control apparatus according to the present disclosure is not limited to this example.

For example, the control apparatus according to the present disclosure may be formed by a plurality of computers. In this case, the control apparatus according to the present disclosure may be called a control system.

### (Operation of Vehicle and Control System)

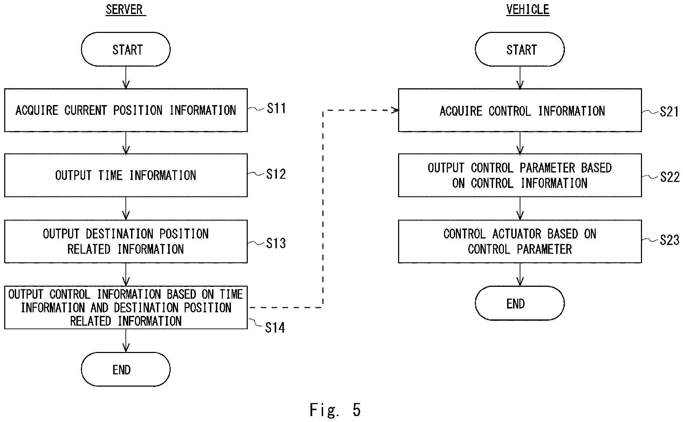

Next, operations performed by the control system according to this embodiment, i.e., a control method according to this embodiment, will be described in a more detailed manner. Fig. 5 is a flowchart for explaining a control method according to the first embodiment.

Note that the following description will be given by referring to Figs. 2, 3 and 4 as appropriate.

In the processing procedure shown in Fig. 5, the processor 201 of the server 200 functions as the current position information acquisition unit 211, the time information output unit 212, the destination position related information output unit 213, and the control information output unit 214 by executing the program PG2.

Further, the processor 111 of the vehicle 100 functions as the travel control unit 115 and the control information acquisition unit 116 by executing the program PG1.

The processor 201 of the server 200 acquires current position information of the vehicles 100 by using a detection result output from the external sensor 300 (Step S11). That is, in the step S11, the processor 201 of the server 200 functions as the current position information acquisition unit 211. Specifically, in the step S11, the processor 201 acquires vehicle position information by using a photograph image acquired from the camera which is the external sensor 300.

Next, the processor 201 of the server 200 outputs time information (Step S12). That is, in the step S12, the processor 201 of the server 200 functions as the time information output unit 212.

Note that the execution order of the steps S11 and S12 may be reversed. Alternatively, the steps S11 and S12 may be performed in parallel with each other.

Next, the processor 201 of the server 200 outputs destination position related information (Step S13). That is, in the step S13, the processor 201 of the server 200 functions as the destination position related information output unit 213.

Lastly, the processor 201 of the server 200 outputs control information based on the time information and the destination position related information (Step S14), and finishes the series of operations. That is, in the step S14, the processor 201 of the server 200 functions as the control information output unit 214. The processor 201 repeats the series of operations shown in Fig. 5, for example, at a predetermined cycle.

Specifically, in the step S14, the processor 201 of the server 200 generates control information by associating the time information with the destination position related information, and transmits the generated control information to the vehicles 100.

Next, operations performed by the vehicle 100 which has received the control information will be described with reference to Fig. 5.

Firstly, the processor 111 of the vehicle 100 acquires control information (Step S21). That is, in the step S21, the processor 111 of the vehicle 100 functions as the control information acquisition unit 116.

Specifically, in the step S21, the processor 111 of the vehicle 100 receives a travel control signal transmitted from the server 200.

Next, the processor 111 of the vehicle 100 outputs a control parameter(s) based on the control information (Step S22) and thereby controls an actuator(s) based on the control parameter(s) (Step S23), and finishes the series of operations. That is, in the steps S22 and S23, the processor 111 of the vehicle 100 functions as the travel control unit 115. The processor 111 repeats the above-described series of operations at a predetermined cycle.

As described above, the control system 50 according to this embodiment sets the destination position of each of a plurality of vehicles 100 for a time specified in the time information.

According to the above-described configuration, the control system 50 according to this embodiment can make the vehicles 100 travel in platooning while maintaining distances between the vehicles 100. As a result, the control system 50 according to this embodiment can prevent a traffic jam from occurring in traveling in platooning.

The control system 50 according to this embodiment synchronizes times at least for the destination position related information, and the control system 50 preferably also synchronizes times for other information used in the control process of the vehicles 100 and for the control operation.

For example, the control system 50 has the configuration for acquiring current position information of each of a plurality of vehicles 100, and times are preferably also synchronized for the current position information. That is, the control system 50 may acquire a plurality of pieces of current position information of which the starting points are simultaneous with each other.

### <Second Embodiment>

### (Configuration of Vehicle and Control System)

Next, a second embodiment according to the present disclosure will be described in detail with reference to the drawings. A control system according to this embodiment is a modified example of the control system according to the first embodiment.

In the control system 50 according to the first embodiment, the control information is information associating time information and destination position related information.

In contrast, the control system 50 according to this embodiment differs from the control system according to the first embodiment in that the control information is a control parameter(s) of the vehicles 100 that is output based on time information and destination position related information.

That is, the control system 50 according to this embodiment differs from the control system according to the first embodiment in that the control information output unit 214 performs some of the operations that are performed by the travel control unit 115 in the first embodiment.

The control system according to the second embodiment will be described hereinafter with reference to Fig. 2. As described above, the configurations of the control information output unit 214 and the travel control unit 115 of the control system according to this embodiment differ from those in the first embodiment, and the rest of the configuration of the control system is similar to that in the first embodiment.

The control information output unit 214 according to this embodiment acquires current position information from the current position information acquisition unit 211, acquires time information from the time information output unit 212, and acquires destination position related information from the destination position related information output unit 213. The control information output unit 214 generates a control parameter(s) of the vehicles 100 based on the acquired current position information, the time information, and the destination position related information. Then, the control information output unit 214 transmits the control parameter(s) to the vehicles 100 as control information.

According to the above-described configuration, the control system 50 according to this embodiment can control even vehicles that do not have a function for generating a control parameter. That is, by the above-described configuration, the control system according to this embodiment can simplify the configuration of the vehicle 100.

The method by which the control information output unit 214 generates a control parameter(s) is not limited to any particular methods. For example, a control parameter(s) can be output by the following method.

For example, the control information output unit 214 according to this embodiment may calculate a distance between a position indicated by destination position related information and a position indicated by current position information. Then, the control information output unit 214 according to this embodiment may output a control parameter(s) related to the speed of the vehicle 100 based on the distance between the position indicated by the destination position related information and the position indicated by the current position information.

Further, for example, the control information output unit 214 according to this embodiment may calculate an angle formed between the direction of a straight line passing through the position indicated by the destination position related information and the position indicated by the current position information and the direction of the vehicle 100. Then, the control information output unit 214 according to this embodiment may output a control parameter(s) related to the steering angle of the vehicle 100 based on the calculated angle.

The travel control unit 115 according to this embodiment acquires control information from the control information acquisition unit 116. In other words, the travel control unit 115 according to this embodiment acquires a control parameter(s) calculated by the server 200 from the control information acquisition unit 116.

The travel control unit 115 according to this embodiment controls the actuator group 120 by using the control parameter recorded in the acquired control information.

Note that the time in the control system 50 according to this embodiment and those in the plurality of vehicles 100 to be controlled are preferably synchronized with each other with appropriate accuracy. That is, the control system according to this embodiment preferably controls the plurality of vehicles 100 in which the times have been synchronized.

In the control system 50 according to this embodiment, a time synchronization signal for synchronizing internal clocks may be exchanged between the vehicles 100 and the server 200. The time synchronization signal may be output according to, for example, PTP (Precision Time Protocol) or NTP (Network Time Protocol).

However, the method for synchronizing times between the vehicles 100 and the server 200 is not limited to the above-described method. For example, a time synchronization server may be separately provided. Then, this time synchronization server may individually communicate with the vehicles 100 and the server 200 so that their times are synchronized with each other.

Further, the method for synchronizing times is not limited to the synchronization of internal clocks. For example, it may be a method including a processing process for acquiring a time deviation amount between the vehicle 100 and the server 200, and correcting their times as appropriate so as to eliminate this time deviation amount.

That is, the method for synchronizing times between the vehicles 100 and the server 200 may be any method as long as it can synchronize times with appropriate accuracy.

### (Operation of Vehicle and Control System)

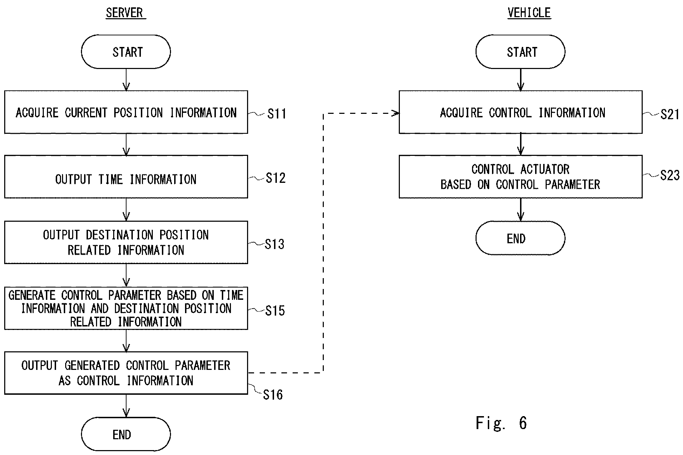

Next, operations performed by the control system according to this embodiment, i.e., a control method according to this embodiment, will be described in a more detailed manner. Fig. 6 is a flowchart for explaining a control method according to the second embodiment.

The processes in steps S11, S12, S13, S21 and S23 shown in Fig. 6 are similar to those in Fig. 5, i.e., the processes according to the first embodiment, and therefore descriptions thereof will be omitted.

In a step S15, the processor 201 of the server 200 generates a control parameter(s) based on time information and destination position related information. Then, in a step S16, the processor 201 of the server 200 outputs the generated control parameter(s) as control information.

Specifically, in the step S16, the processor 201 of the server 200 transmits the output control information to the vehicles 100.

That is, in the steps S15 and S16, the processor 201 of the server 200 functions as the control information output unit 214.

In this embodiment, the vehicles 100 do not perform the step S22 which is performed in the first embodiment. That is, the vehicle 100 according to this embodiment does not output a control parameter. As a result, the vehicle 100 according to this embodiment can perform unattended driving even by using the vehicle control apparatus 110 which has a simpler configuration than that in the first embodiment.

As described above, in the control system 50 according to this embodiment, a control parameter(s) for the vehicles 100 that is output based on time information and destination position related information is transmitted to the vehicles 100 as control information.

According to the above-described configuration, the vehicle 100 does not need to have a configuration for outputting a control parameter. As a result, the control system 50 according to this embodiment can simplify the configuration of the vehicle 100.

### (Other Embodiment 1)

In the above-described embodiments, the object to be controlled by the control system is vehicles, but the object to be controlled by the control system according to the present disclosure is not limited to vehicles. That is, the control system according to the present disclosure can control any type of mobile bodies that can travel in platooning.

However, in the present disclosure, the "mobile body" means an object that can move, and is, for example, a vehicle or an electric vertical take-off and landing aircraft (so-called a flying car).

The vehicle may be a vehicle that travels on wheels or by an endless track. For example, the vehicle is a passenger car, a truck, a bus, a two-wheel vehicle, a four-wheel vehicle, a tank, a construction vehicle, or the like. Examples of vehicles include a battery electric vehicle (BEV: Battery Electric Vehicle), a gasoline vehicle, a hybrid vehicle, and a fuel cell vehicle.

When the mobile body is an object other than the vehicle, the terms "vehicle" and "car" in the present disclosure may be replaced with "mobile body" as appropriate, and the term "traveling" may be replaced with "moving" as appropriate.

### (Other Embodiment 2)

In the above-described first embodiment, the server 200 performs a series of processes from the acquisition of vehicle position information to the generation of a travel control signal. In contrast, at least some of the processes from the acquisition of vehicle position information to the generation of a travel control signal may be performed by the vehicle 100. For example, Forms (1) to (3) described below may be adopted.
(1) The server 200 may acquire vehicle position information, determine a destination position to which the vehicle 100 should travel next, and generate a route from the current location of the vehicle 100 indicated in the acquired vehicle position information to the destination position. The server 200 may generate a route to an intermediate destination position located between the current location and the final destination, or generate a route to the final destination. The server 200 may transmit the generated route to the vehicles 100. The vehicle 100 may generate a travel control signal so as to travel on the route received from the server 200, and control the actuator group 120 by using the generated travel control signal.
(2) The server 200 may acquire vehicle position information and transmit the acquired vehicle position information to the vehicles 100. The vehicle 100 may determine a destination position to which the vehicle 100 should travel next, generate a route from the current location of the vehicle 100 indicated in the received vehicle position information to the destination position, generate a travel control signal so as to travel on the generated route, and control the actuator group 120 by using the generated travel control signal.
(3) In the above-described Forms (1) and (2), the vehicle 100 may include an internal sensor mounted thereon, and a detection result output from the internal sensor may be used for at least one of the generation of a route and the generation of a travel control signal. The internal sensor is a sensor mounted on the vehicle 100. Examples of internal sensors may include a sensor for detecting a motion state of the vehicle 100, a sensor for detecting a motion state of each part of the vehicle 100, and a sensor for detecting an environment around the vehicle 100. Specifically, examples of internal sensors may include a camera, LiDAR, a millimeter-wave radar, an ultrasonic sensor, a GPS sensor, an acceleration sensor, and a gyroscopic sensor. For example, in the above-described Form (1), the server 200 may acquire a detection result of the internal sensor and take the acquired detection result of the internal sensor into consideration for a route when the route is generated. In the above-described Form (1), the vehicle 100 may acquire a detection result of the internal sensor and take the acquired detection result of the internal sensor into consideration for a travel control signal when the travel control signal is generated. In the above-described Form (2), the vehicle 100 may acquire a detection result of the internal sensor and take the acquired detection result of the internal sensor into consideration for a route when the route is generated. In the above-described Form (2), the vehicle 100 may acquire a detection result of the internal sensor and take the acquired detection result of the internal sensor into consideration for a travel control signal when the travel control signal is generated.

### (Other Embodiment 3)

In the above-described first embodiment, the vehicle 100 may include an internal sensor mounted thereon. Further, the vehicle control apparatus 110 may acquire a detection result of the internal sensor, acquire current position information of the vehicle 100 based on the acquired detection result, and output a control parameter(s) based on the acquired current position information.

### (Other Embodiment 4)

In the above-described first embodiment, the vehicle 100 may receive a detection result from the external sensor 300. Then, it may acquire current position information of the vehicle 100 by using the received detection result, and output a control parameter(s) based on the acquired current position information.

### (Other Embodiment 5)

In the above-described first embodiment, a control parameter(s) may be output based on both the detection result of the internal sensor described in Other Embodiment 3 and the detection result of the external sensor described in Other Embodiment 4.

In each of the above-described embodiments, it is sufficient if the vehicle 100 include a configuration by which it can move by unattended driving. For example, it may be a form of a platform including the following configuration. Specifically, it is sufficient if the vehicle 100 include at least the vehicle control apparatus 110 and the actuator group 120 in order to perform three functions of "running", "turning", and "stopping" by unattended driving. When the vehicle 100 acquires information for unattended driving from the outside, the vehicle 100 may further include a communication apparatus 130. That is, the vehicle 100 which can move by unattended driving may not be equipped with at least some of the interior components such as the driver's seat and the dashboard, may not be equipped with at least some of the exterior components such as bumpers and fenders, and may not be equipped with the body shell. In this case, the remaining components such as the body shell may be mounted on the vehicle 100 before the vehicle 100 is shipped from the factory. Alternatively, the remaining components such as the body shell may be mounted on the vehicle 100 after the vehicle 100 is shipped from the factory in the state in which the remaining components such as the body shell have not yet been mounted on the vehicle 100.

The components may be mounted from any direction such as from above, from below, from the front side, from the rear side, from the right side, or from the left side of the vehicle 100, and may be mounted from the same direction or from different directions. Note that the position of the platform may also be determined in a manner similar to that for the vehicle 100 in the above-described embodiments.

Further, in this case, the vehicle 100 may be manufactured by combining a plurality of modules with each other. The module means a unit composed of a plurality of components assembled according to the part or the function of the vehicle 100. For example, the platform of the vehicle 100 may be manufactured by combining a front module constituting a front part of the platform, a central module constituting a central part of the platform, and a rear module constituting a rear part of the platform. Note that the number of modules constituting the platform is not limited to three. That is, the number of modules may be one, two, four, or more. Further, in addition to or in place of the components constituting the platform, components constituting a part of the vehicle 100 other than the platform thereof may be prepared in the form of a module. Further, various modules may include optional exterior components such as bumpers and grills, and optional interior components such as seats and consoles. Further, any type of mobile body, in addition to the vehicle 100, may be manufactured by combining a plurality of modules with each other. Such a module may be manufactured, for example, by joining a plurality of components with each other by welding or using fixtures, or by integrally molding at least some of the components constituting the module as a single component by casting. The molding method for integrally molding a single component, especially a relatively large component, is also called giga-casting or mega-casting. For example, the above-described front module, the central module, and the rear module may be manufactured by using giga-casting.

When operations performed by the vehicle 100 in the form of a platform is controlled as described above, manufacturing work such as assembling of components, operations of switches, welding, and inspections may be performed for the vehicle 100 which is traveling in platooning under the control by the control system 50 according to the present disclosure. That is, manufacturing work may be performed for a plurality of vehicles which are traveling in platooning based on control information, so that the plurality of vehicles may be manufactured.

The control system according to the present disclosure can prevent a traffic jam from occurring in traveling in platooning. Therefore, by introducing a control system according to the present disclosure in the above-described manufacturing process of vehicles, it is possible to stably supply vehicles to a place where manufacturing work is carried out therefor. As a result, the control system according to the present disclosure can improve the efficiency of the manufacturing of vehicles.

Note that such a manufacturing method may be called a method for manufacturing mobile bodies according to the present disclosure.

### (Supplementary Note)

The method for conveying vehicles 100 by using the traveling of the vehicles 100 by unattended driving is also called "self-propelled conveyance". Further, a configuration for implementing self-propelled conveyance is also called "vehicle remote control autonomous traveling conveyance system". Further, the production method for producing vehicles 100 by using self-propelled conveyance is also called "self-propelled production". In the self-propelled production, for example, at least a part of the conveyance of vehicles 100 is carried out by self-propelled conveyance in a factory FC for manufacturing vehicles 100.

Note that the present disclosure is not limited to the above-described embodiments, and they may be modified as appropriate without departing from the scope and spirit of the disclosure.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A control apparatus configured to control operations performed by a plurality of mobile bodies 100 traveling in platooning, comprising:
a time information output unit (212) configured to output time information specifying a time;
a destination position related information output unit (213) configured to output, for each of the plurality of mobile bodies 100, destination position related information related to a position which the mobile body (100) should reach at a time indicated by time information; and
a control information output unit (214) configured to output control information for controlling the operations performed by the mobile bodies (100) based on the time information and the destination position related information.

2. The control apparatus according to claim 1, wherein the control information is information associating the time information with the destination position related information.

3. The control apparatus according to claim 1, wherein the control information is a control parameter of the mobile body (100) output based on the time information and the destination position related information.

4. The control apparatus according to claim 3, wherein
the destination position related information includes, for each mobile body (100), position information indicating a position which the mobile body (100) should reach at a time indicated by the time information,
the control apparatus further comprises a current position information acquisition unit (211) configured to acquire current position information indicating a current position of the mobile body, and
the control information output unit (214) outputs a control parameter related to a speed of the mobile body (100) based on a distance between a position indicated by the destination position related information and a position indicated by the current position information.

5. The control apparatus according to any one of claims 1 to 3, wherein
the destination position related information includes, for each mobile body (100), position information indicating a position which the mobile body (100) should reach at a time indicated by the time information,
the control apparatus further comprises a current position information acquisition unit (211) configured to acquire current position information of the mobile body (100), and
when a distance between a position indicated by the destination position related information and a position indicated by the current position information satisfies a predetermined condition, the control information output unit (214) outputs control information for instructing the mobile body to perform an emergency operation.

6. The control apparatus according to claim 5, wherein when a difference in distance between the position indicated by the destination position related information and the position indicated by the current position information is equal to or longer than a predetermined value, the control information output unit (214) outputs control information for instructing the mobile body (100) to perform an emergency operation.

7. A control system configured to control operations performed by a plurality of mobile bodies (100) traveling in platooning, comprising:
a time information output unit (212) configured to output time information specifying a time;
a destination position related information output unit (213) configured to output, for each of the plurality of mobile bodies (100), destination position related information related to a position which the mobile body (100) should reach at a time indicated by time information; and
a control information output unit (214) configured to output control information for controlling the operations performed by the mobile bodies (100) based on the time information and the destination position related information.

8. A control method for controlling operations performed by a plurality of mobile bodies (100) traveling in platooning, comprising:
outputting time information specifying a time;
outputting, for each of the plurality of mobile bodies (100), destination position related information related to a position which the mobile body (100) should reach at a time indicated by time information; and
outputting control information for controlling the operations performed by the mobile bodies (100) based on the time information and the destination position related information.

9. A control program for controlling operations performed by a plurality of mobile bodies (100) traveling in platooning, configured to cause a computer to perform operations including:
outputting time information specifying a time;
outputting, for each of the plurality of mobile bodies (100), destination position related information related to a position which the mobile body (100) should reach at a time indicated by time information; and
outputting control information for controlling the operations performed by the mobile bodies (100) based on the time information and the destination position related information.

10. A method for manufacturing mobile bodies, comprising:
outputting time information specifying a time;
outputting, for each of a plurality of mobile bodies (100) traveling in platooning, destination position related information related to a position which the mobile body 100 should reach at a time indicated by time information;
outputting control information for controlling the operations performed by the mobile bodies (100) based on the time information and the destination position related information; and
performing manufacturing work for the plurality of mobile bodies (100) traveling in platooning based on the control information.
